# EUROPÄISCHE PATENTSCHRIFT

(11) **EP 2 814 625 B1**
(45) Veröffentlichungstag und Bekanntmachung des Hinweises auf die Patenterteilung: **02.12.2015**
(21) Anmeldenummer: 13703372.6
(22) Anmeldetag: 04.02.2013
(51) Int. Cl.: B21B 31/07, F16J 15/32

(54) **DICHTUNGSVORRICHTUNG UND WALZENANORDNUNG**
SEALING DEVICE AND ROLL ARRANGEMENT
DISPOSITIF D'ÉTANCHÉITÉ ET SYSTÈME DE CYLINDRE

(30) Priorität: 15.02.2012 DE 102012202285; 30.11.2012 DE 102012221970
(43) Veröffentlichungstag der Anmeldung: 24.12.2014
(73) Patentinhaber: SMS group GmbH, 40237 Düsseldorf (DE)
(72) Erfinder: KELLER, Karl, 57271 Hilchenbach (DE); ROEINGH, Konrad, 57271 Hilchenbach (DE); KNIE, Daniel, 57258 Freudenberg (DE)
(74) Vertreter: Klüppel, Walter
(86) Internationale Anmeldenummer: PCT/EP2013/052110
(87) Internationale Veröffentlichungsnummer: WO 2013/120713

(56) Entgegenhaltungen:
- EP-A2- 0 297 322
- EP-A2- 0 997 673
- WO-A1-2008/092616

## Beschreibung

Die vorliegende Erfindung betrifft eine Dichtungsvorrichtung zum Einbau zwischen den Walzenzapfen einer Walze und einem Einbaustück, in welchem die Walze in einem Walzgerüst drehbar gelagert ist. Darüber hinaus betrifft die Erfindung eine Walzenanordnung mit einer Walze und einem Einbaustück, in welchem die Walze mit einem ihrer Zapfen drehbar gelagert ist. Weiterhin umfasst die Walzenanordnung die erfindungsgemäße Dichtungsvorrichtung, welche zwischen dem kegelstumpfförmigen Walzenzapfen und einem Dichtungsring des Einbaustücks gelagert ist.

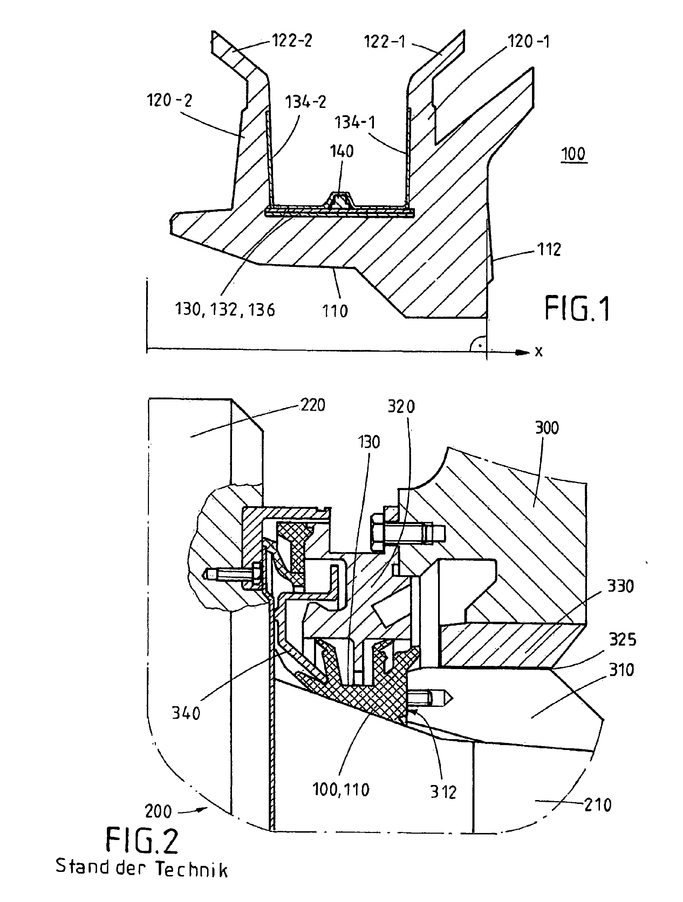

Derartige Dichtungsvorrichtungen sind aus dem Stand der Technik, zum Beispiel aus den Europäischen Patentschriften EP 1 625 897 B1 oder EP 1 136 142 B1 oder der internationalen Patentanmeldung WO 2008/092616 grundsätzlich bekannt. Weiterhin ist eine derartige Dichtungsvorrichtung und Walzenanordnung aus der Informationsbroschüre "MORGOIL, Roll Neck Bearings" der SMS Siemag AG bekannt, wie sie in Figur 2 der vorliegenden Beschreibung dargestellt sind. Konkret ist in Figur 2 eine klassische Walzenanordnung gezeigt mit einer Walze 200, welche im Wesentlichen aus einem Walzenballen 220 und mindestens einem an den Ballen angeformten kegelstumpfförmigen Walzenzapfen 210 besteht. Auf den Walzenzapfen drehfest aufgeschoben ist eine Zapfenbuchse 310. Der Walzenzapfen mit der Zapfenbuchse ist drehbar gelagert in einer Lagerbuchse 330, welche ihrerseits drehfest mit einem Einbaustück 300 verbunden ist. Zwischen der Zapfenbuchse 310 und der Lagerbuchse 330 ist ein Schmierfilm 325 ausgebildet.

An die ballenseitige Stirnseite des Einbaustücks 300 ist ein Dichtungsring 320 als Deckel angeschraubt.

Weiterhin ist eine Dichtungsvorrichtung 110 zu erkennen, welche - in radialer Richtung - zwischen dem kegelstumpfförmigen Walzenzapfen 210 und dem Dichtungsring und - in axialer Richtung - zwischen der ballenseitigen Stirnseite 312 der Zapfenbuchse 310 und dem kegelstumpfförmigen Walzenzapfen 210 bzw. einem Anschlag 340 eingespannt ist. Die aus dem Stand der Technik bekannte Dichtungsvorrichtung 100 weist ein ringförmiges Bewehrungselement 130 auf, welches bandförmig ausgebildet ist und den Hauptkörper 110 der Dichtungsvorrichtung auf seiner Außenseite koaxial zur Längsachse der Walzenanordnung bzw. des Dichtungselementes umspannt. Der bandförmige Abschnitt 132 sichert eine hohe Maßgenauigkeit bzw. Verformungsstabilität insbesondere gegenüber auftretenden Fliehkräften.

Beim Zusammenbau der Walzenanordnung wird die Zapfenbuchse 310 in Richtung Walzenballen 220 auf den Walzenzapfen aufgeschoben. Dabei wird gleichzeitig die Dichtungsvorrichtung 100 in axialer Richtung zwischen dem Anschlag 340, dem kegelstumpfförmigen Walzenzapfen 210 und der ballenseitigen Stirnseite 312 der Zapfenbuchse 310 eingespannt. Bei dieser axialen Verschiebung besteht aufgrund der gegebenen Reibungsverhältnisse die Gefahr, dass sich die Dichtungsvorrichtung so verformt, dass die Dichtungskränze "einklappen". Die Dichtungsvorrichtung und insbesondere die Dichtlippen können dann ihre Funktion nicht mehr ordnungsgemäß erfüllen.

Ausgehend von diesem Stand der Technik liegt der Erfindung die Aufgabe zugrunde, eine bekannte Dichtungsvorrichtung und Walzenanordnung dahingehend weiterzubilden, dass die Form der Dichtungsvorrichtung beim Aufschieben auf den kegelstumpfförmigen Walzenzapfen stabil erhalten bleibt.

Diese Aufgabe wird durch die im Anspruch 1 beanspruchte Dichtungsvorrichtung gelöst. Diese Dichtungsvorrichtung ist dadurch gekennzeichnet, dass ihr Bewehrungselement neben dem koaxialen bandförmigen Abschnitt mindestens einen mit dem bandförmigen Abschnitt verbundenen und sich von dem bandförmigen Abschnitt radial nach außen erstreckenden Flansch aufweist, welcher mit dem Dichtungskranz verbunden ist.

Der Begriff "axial" meint im Rahmen der vorliegenden Beschreibung stets "in Richtung" der Längsachse der Dichtungsvorrichtung oder parallel dazu. Im zusammengebauten Zustand, dass heißt, wenn die Dichtungsvorrichtung zwischen Walzenzapfen und Einbaustück montiert ist, fällt die Längsachse der Dichtungsvorrichtung mit der Längsachse der Walze zusammen. Die Begriffe "radial" und "koaxial" beziehen sich jeweils auf die besagte Längsachse.

Der erfindungsgemäße Flansch ist mit dem koaxialen bandförmigen, dass heißt rohrförmigen Abschnitt des Bewehrungselementes zumindest weitgehend biegesteif verbunden, so dass er beim Aufschieben des Dichtungselementes auf den Zapfen auftretenden koaxialen Kräften standhalten kann. Aufgrund seiner Verbindung mit dem Dichtungskranz gewährleistet der Flansch deshalb auch eine deutlich vergrößerte Biegesteifigkeit des Dichtungskranzes bei auftretenden koaxialen Kräften. Auf diese Weise wird gewährleistet, dass der Dichtungskranz mit den angeformten Dichtlippen auch nach dem Aufschieben auf den Walzenzapfen in eingebautem Zustand seiner Dichtfunktion nachkommen kann, weil dann gewährleistet ist, dass die Dichtlippen an der Innenseite des Dichtungsringes anliegen.

Das Bewehrungselement mit seinem koaxialen bandförmigen Abschnitt und seinem mindestens einen daran angeformten Flansch ist vorzugsweise einstückig aus faserverstärktem Kunststoff gebildet. Die Verwendung von faserverstärktem Kunststoff bietet den Vorteil, dass die gewünschte dreidimensionale Struktur des Bewehrungselementes mit U-förmigem Querschnitt einfach hergestellt werden kann, dass das Gewicht des Bewehrungselementes relativ gering gehalten werden kann und dass insbesondere die erforderliche Formstabilität und Steifigkeit erzielt werden können. Als Fasermaterialien eignen sich insbesondere Textil-, Aramid-, Kohlenstoff-, oder Glasfasern, vorzugsweise in Form eines Gewebes. Der bandförmige Abschnitt des Bewehrungselementes weist vorzugsweise eine Armierung in Form eines Metallbandes, vorzugsweise eine Stahlbandes auf, wobei die Armierung zumindest teilweise mit dem faserverstärktem Kunststoff umgeben ist.

Gemäß einem Ausführungsbeispiel weist der Hauptkörper nicht nur ein, sondern zwei angeformte sich radial nach außen erstreckende Dichtungskränze auf, welche parallel zueinander angeordnet und in axialer Richtung zueinander beabstandet sind. Bei diesem Ausführungsbeispiel weist das Bewehrungselement neben dem koaxialen bandförmigen Abschnitt nicht nur einen, sondern zwei mit dem bandförmigen Abschnitt verbundene und sich radial von diesem nach außen erstreckende Flansche auf, welche parallel zueinander angeordnet und in axialer Richtung zueinander beabstandet sind. Das Bewehrungselement ist dann vorzugsweise zwischen den beiden Dichtungskränzen angeordnet und die beiden Flansche des Bewehrungselementes sind jeweils mit den einander gegenüberliegenden Stirnseiten der Dichtungskränze verbunden. In diesem Fall gewährleisten die beiden Flansche die gewünschte Formstabilität von insbesondere den beiden Dichtungskränzen gegen mögliche auftretende koaxiale Kräfte bei der Montage.

Gemäß einem weiteren Ausführungsbeispiel ist der koaxiale bandförmige Abschnitt des Bewehrungselementes mit Hilfe eines Sicherungsmittels, vorzugsweise in Form einer Stiftsicherung gegen eine Verschiebung relativ zu dem Hauptkörper gesichert. Die Gefahr einer Verschiebung des Bewehrungselementes relativ zum Hauptkörper besteht insbesondere bei der Fertigung des Dichtungselementes, wenn das Dichtungsmaterial in eine entsprechende Form für die Dichtungsvorrichtung eingespritzt wird. Dann ist es wichtig, dass das vorgefertigte Bewehrungselement ortstabil gesichert wird, damit es bei ausgehärteter Dichtungsvorrichtung an der richtigen Stelle platziert ist.

Das Bewehrungselement ist mit dem Dichtungselement vorzugsweise unlösbar verbunden. Es stellt somit einen integrierten Bestandteil der Dichtungsvorrichtung dar und ist insbesondere in die Dichtungsvorrichtung bzw. den Hauptteil und die Dichtlippen einvulkanisiert.

Gemäß einem weiteren Ausführungsbeispiel weist die zapfenbuchsenseitige Stirnseite des Hauptkörpers der Dichtungsvorrichtung - im Querschnitt gesehen und im unbelasteten Zustand - eine keilförmige Verbreiterung auf, wobei sich der Hauptkörper in radialer Richtung nach Innen, dass heißt in Richtung auf die Längsachse der Dichtungsvorrichtung hin - an der Stirnseite zunehmenden verbreitert. Diese keilförmige Ausbildung der Stirnseite des Hauptkörpers der Dichtungsvorrichtung bietet den Vorteil, dass die Kraft, mit welcher der Dichtungskörper in axialer Richtung zwischen dem Anschlag, dem keilstumpfförmig ausgebildeten Walzenzapfen und der ballenseitigen Stirnseite der Zapfenbuchse eingespannt ist, in der Nähe der Walzenzapfen größer ist als weiter außen. Diese besondere Verteilung der axialen Einspannkräfte in radialer Richtung trägt ebenfalls zur Formstabilität der Dichtungsvorrichtung in eingebautem Zustand bei. Insbesondere gewährleistet die durch die keilförmige Ausbildung der Stirnseite des Hauptkörpers bewirkte vergrößerte Druckkraft in koaxialer Richtung in Walzenzapfennähe eine Kompensation der auftretenden Reibungskräfte an den Stellen, an denen die Dichtungsvorrichtung den Walzenzapfen berührt und trägt somit auch zu der besagten verbesserten Formstabilität der Dichtungsvorrichtung in eingebautem Zustand bei.

Die oben genannte Aufgabe der Erfindung wird weiterhin durch eine Walzenanordnung mit der erfindungsgemäßen Dichtungsvorrichtung gelöst. Die Vorteile dieser Lösung entsprechenden den oben mit Bezug auf die beanspruchte Dichtungsvorrichtung genannten Vorteilen.

Gemäß einem Ausführungsbeispiel der Walzenanordnung ist die ballenseitige Stirnseite der Zapfenbuchse radial glatt ausgebildet. Das heißt, die Stirnseite bildet eine Ebene senkrecht zur Längsachse. Diese Ausbildung der Stirnseite ist wichtig, um in Verbindung mit der keilförmigen gegenüberliegenden Stirnseite des Hauptkörpers der Dichtungsvorrichtung die gewünschte radiale Verteilung der axialen Druckkräfte zu erzielen. Selbstverständlich könnte die gleiche radiale Verteilung auch dadurch erzielt werden, dass die ballenseitige Stirnseite der Zapfenbuchse keilförmig und die zugewandte Stirnseite des Hauptkörpers der Dichtungsvorrichtung radial glatt ausgebildet wäre.

Der Beschreibung sind insgesamt zwei Figuren beigefügt.

Es zeigen
- Figur 1: eine Dichtungsvorrichtung gemäß der vorliegenden Erfindung; und
- Figur 2: eine Walzenanordnung mit einer Dichtungsvorrichtung gemäß dem Stand der Technik.

Die Erfindung wird nachfolgend anhand des in Figur 1 gezeigten Ausführungsbeispiels detailliert beschrieben. Gleiche technische Elemente sind in den Figuren 1 und 2 mit gleichen Bezugszeichen bezeichnet.

Figur 1 zeigt die erfindungsgemäße Dichtungsvorrichtung 100. Sie besteht im Wesentlichen aus einem ringförmigen Hauptkörper 110, an welchen zwei sich radial nach außen erstreckende Dichtungskränze 120-1, 120-2 angeformt sind. An die Dichtungskränze sind jeweils Dichtlippen 122-1, 122-2 angeformt. Der Hauptkörper 110 mit den Dichtungskränzen und den Dichtlippen ist typischerweise einstückig aus einem geeigneten Dichtungswerkstoff mit hoher Verschleißfestigkeit und hoher Medien- und Alterungsbeständigkeit gefertigt. Daneben weist die Dichtungsvorrichtung 100 ein ringförmiges Bewehrungselement 130 auf, welches aus einem bandförmigen Abschnitt 132 und zwei sich davon radial nach außen erstreckenden Flanschen 134-1, 134-2 besteht. Das Bewehrungselement ist zwischen den beiden Dichtungskränzen angeordnet und die beiden Flansche 134-1, 134-2 sind jeweils mit den gegenüberliegenden Stirnseiten der Dichtungskränze 120-1, 120-2 verbunden. Das Bewehrungselement ist vorzugsweise einstückig aus faserverstärktem Kunststoff gebildet. Der bandförmigen Abschnitt 132 des Bewehrungselementes weist typischerweise eine Armierung 136 in Form eines Metallbandes auf, welches zumindest teilweise von dem faserverstärktem Kunststoff umgeben ist. Das Bewehrungselement ist typischerweise fest in die Dichtungsvorrichtung integriert, das heißt unlösbar mit dieser verbunden. Vorzugsweise ist das Bewehrungselement 130 in die Dichtungsvorrichtung 100 einvulkanisiert.

In Figur 1 ist weiterhin ein Sicherungsmittel 140 zu erkennen, welches bei der Fertigung der Dichtungsvorrichtung sicherstellt, dass sich das Bewehrungselement nicht in unerwünschter Weise gegenüber dem Hauptkörper oder den Dichtungskränzen 120-1, 120-2 verschiebt.

Schließlich ist in Figur 1 zu erkennen, dass die zapfenbuchsige Stirnseite 112 des Hauptkörpers 110 der Dichtungsvorrichtung - im Querschnitt gesehen - keilförmig ausgebildet ist. Konkret ist die Stirnseite in radialer Richtung nach Innen, das heißt in Richtung auf die Längsachse x der Dichtungsvorrichtung hin zunehmend verbreitert.

Die erfindungsgemäße Dichtungsvorrichtung 100 gemäß Figur 1 ist vorgesehen zum Einbau in die Walzenanordnung gemäß Figur 2. Die erfindungsgemäße Dichtvorrichtung gemäß Figur 1 ist geeignet gegen die in Figur 2 gezeigte aus dem Stand der Technik bekannte Dichtungsvorrichtung ausgetauscht zu werden. Insbesondere aufgrund der erfindungsgemäß vorgesehenen Flansche des Bewehrungselementes und der keilförmigen Ausbildung der Stirnseite ist die erfindungsgemäße Dichtungsvorrichtung 100 nach ihrem Einbau in die Walzenanordnung jedoch vorteilhafterweise deutlich formstabiler als die aus dem Stand der Technik bekannte Dichtungsvorrichtung.

### Bezugszeichenliste

- 100: Dichtungsvorrichtung
- 110: Hauptkörper
- 112: zapfenbuchsenseitige Stirnseite des Hauptkörpers
- 120-1: Dichtungskranz
- 120-2: Dichtungskranz
- 122-1: Dichtlippe
- 122-2: Dichtlippe
- 130: Bewehrungselement
- 132: bandförmiger Abschnitt
- 134-1: Flansch
- 134-2: Flansch
- 136: Armierung
- 140: Sicherungsmittel
- 200: Walze
- 210: Walzezapfen
- 220: Walzenballen
- 300: Einbaustück
- 310: Zapfenbuchse
- 312: ballenseitige Stirnseite der Zapfenbuchse
- 320: Dichtungsring
- 325: Schmierfilm
- 330: Lagerbuchse
- 340: Anschlag

- x: axiale Richtung, gleichbedeutend mit der Längsrichtung der Dichtungsvorrichtung oder der Walze

## Patentansprüche

1. Dichtungsvorrichtung (100) zum Einbau zwischen den Walzenzapfen (210) einer Walze (200) und ein Einbaustück (300), in welchem die Walze in einem Walzgerüst drehbar gelagert ist, wobei die Dichtungsvorrichtung (100) aufweist:
einen ringförmigen Hauptkörper (110) zum Aufschieben auf den Walzenzapfen (210);
mindestens einen an den Hauptkörper angeformten und sich von dem Hauptkörper radial nach außen erstreckenden Dichtungskranz (120-1) mit angeformter Dichtlippe (122-1); und
ein ringförmiges Bewehrungselement (130) mit einem bandförmigen Abschnitt (132), welcher den Hauptkörper (110) auf seiner Außenseite koaxial umspannt;
**dadurch gekennzeichnet, dass**
das Bewehrungselement (130) neben dem koaxialen bandförmigen Abschnitt (132) mindestens einen mit dem bandförmigen Abschnitt verbundenen und sich von dem bandförmigen Abschnitt radial nach außen erstreckenden Flansch (134-1) aufweist, welcher mit dem Dichtungskranz (120-1) verbunden ist.

2. Dichtungsvorrichtung (100) nach Anspruch 1;
**dadurch gekennzeichnet, dass**
das Bewehrungselement (130) einstückig und aus faserverstärktem Kunststoff gebildet ist.

3. Dichtungsvorrichtung (100) nach Anspruch 2;
**dadurch gekennzeichnet, dass**
das der bandförmige Abschnitt (132) des Bewehrungselementes eine Armierung (136) in Form eines Metallbandes, vorzugsweise eines Stahlbandes, aufweist, welche zumindest teilweise mit dem faserverstärkten Kunststoff umgeben ist.

4. Dichtungsvorrichtung (100) nach einem der Ansprüche 2 oder 3,
**dadurch gekennzeichnet, dass**
die Faser für den faserverstärkten Kunststoff in Form einer Textil-, einer Aramid-, einer Kohlenstoff- oder einer Glasfaser, vorzugsweise in Form eines Gewebes ausgebildet ist.

5. Dichtungsvorrichtung (100) nach einem der vorangegangenen Ansprüche,
**dadurch gekennzeichnet,**
**dass** zwei an den Hauptkörper (110) angeformte und sich radial von dem Hauptkörper nach außen erstreckende Dichtungskränze (120-1, 120-2) vorgesehen sind, welche parallel zueinander angeordnet und in axialer Richtung (x) zueinander beabstandet sind; und
**dass** das Bewehrungselement (130) neben dem koaxialen bandförmigen Abschnitt (132) zwei mit dem bandförmigen Abschnitt verbundene und sich von dem bandförmigen Abschnitt radial nach außen erstreckende Flansche (134-1, 134-2) aufweist, welche parallel zueinander angeordnet und in axialer Richtung (x) zueinander beabstandet sind,
wobei das Bewehrungselement (130) zwischen den beiden Dichtungskränzen (120-1, 120-2) angeordnet ist und die beiden Flansche (134-1, 134-2) mit den einander gegenüber liegenden Stirnseiten der Dichtungskränze verbunden sind.

6. Dichtungsvorrichtung (100) nach einem der vorangegangenen Ansprüche, **gekennzeichnet durch**
ein Sicherungsmittel (140) zum Sichern des Bewehrungselementes (130) gegen eine Verschiebung relativ zu dem Hauptkörper (110).

7. Dichtungsvorrichtung (100) nach Anspruch 6,
**dadurch gekennzeichnet, dass**
das Sicherungsmittel in Form von mindestens einer Stiftsicherung ausgebildet ist, welche sich in radialer Richtung erstreckt.

8. Dichtungsvorrichtung (100) nach einem der vorangegangenen Ansprüche, **dadurch gekennzeichnet, dass**
das Bewehrungselement (130) ein integrierter Bestandteil der Dichtungsvorrichtung (100) ist.

9. Dichtungsvorrichtung (100) nach Anspruch 8,
**dadurch gekennzeichnet, dass**
das Bewehrungselement (130) in den Hauptkörper (110) und den mindestens einen Dichtungskranz einvulkanisiert ist.

10. Dichtungsvorrichtung (100) nach einem der vorangegangenen Ansprüche,
**dadurch gekennzeichnet, dass**
die zapfenbuchsenseitige Stirnseite (112) des Hauptkörpers der Dichtungsvorrichtung - im Querschnitt gesehen - im entspannten, nicht eingebauten Zustand keilförmig ausgebildet ist, wobei der Hauptkörper in radialer Richtung nach innen - in Richtung auf die Längsachse (x) der Dichtungsvorrichtung hin gesehen - an der Stirnseite zunehmend verbreitert ist.

11. Walzenanordnung mit:
einer Walze (200) mit einem Walzenballen (220) und mindestens einem kegelstumpfförmigen an den Walzenballen angeformten Walzenzapfen (210);
einer auf den Walzenzapfen aufgeschobenen Zapfenbuchse (310);
einem Einbaustück (300) mit einem an der ballenseitigen Stirnseite des Einbaustücks angeordneten Dichtungsring (320);
einer in dem Einbaustück drehfest angeordneten Lagerbuchse (330), wobei der Walzenzapfen (210) mit der Zapfenbuchse (310) in der Lagerbuchse drehbar gelagert ist; und
der Dichtungsvorrichtung (100) nach einem der vorangegangenen Ansprüche, welche - in radialer Richtung - zwischen dem kegelstumpfförmigen Walzenzapfen (210) und dem Dichtungsring (320), an welchem die mindestens eine Dichtlippe (122-1, 122-2) anliegt, angeordnet ist; und
welche - in axialer Richtung - zwischen dem kegelstumpfförmigen Walzenzapfen (210) und der Zapfenbuchse (310) eingespannt ist.

12. Walzenanordnung nach Anspruch 11,
**dadurch gekennzeichnet, dass**
die zapfenbuchsenseitige Stirnseite (112) des Hauptkörpers der Dichtungsvorrichtung (100) - in eingebautem und eingespannten Zustand - flächig an der gegenüberliegenden radial glatten Stirnseite (312) der Zapfenbuchse (310) anliegt.

## Claims

1. Sealing device (100) for installation between the roll pin (210) of a roll (200) and a chock (300), in which the roll is rotatably mounted in a roll stand, wherein the sealing device (100) comprises:
an annular main body (110) for pushing onto the roll pin (210);
at least one sealing collar (120-1), which is formed on the main body and extends radially outwardly from the main body, with integrally formed sealing lip (122-1); and
an annular reinforcing element (130) with a strip-shaped section (132) which coaxially encompasses the main body (110) on the outer side thereof,
**characterised in that**
the reinforcing element (130) has in addition to the coaxial strip-shaped section (132) at least one flange (134-1) which is connected with the strip-shaped section and extends radially outwardly therefrom and which is connected with the sealing collar (120-1).

2. Sealing device (100) according to claim 1, **characterised in that** the reinforcing element (130) is formed in one piece and from fibre-reinforced synthetic material.

3. Sealing device (100) according to claim 2, **characterised in that** the strip-shaped section (132) of the reinforcing element comprises a reinforcement (136) in the form of a metal strip, preferably a steel strip, which is surrounded at least partly by the fibre-reinforced synthetic material.

4. Sealing device (100) according to one of claims 2 and 3, **characterised in that** the fibre for the fibre-reinforced synthetic material is constructed in the form of a textile, aramide, carbon or glass fibre, preferably in the form of a fabric.

5. Sealing device (100) according to any one of the preceding claims, **characterised in that**
two sealing collars (120-1, 120-2), which are formed at the main body (110) and extend radially outwardly therefrom and which are arranged parallel to one another and at a mutual spacing in axial direction (x), are provided; and
the reinforcing element (130) has in addition to the coaxial strip-shaped section (132) two flanges (134-1, 134-2), which are connected with the strip-shaped section and extend radially outwardly therefrom and which are arranged parallel to one another and at a mutual spacing in axial direction (x), wherein the reinforcing element (130) is arranged between the two sealing collars (120-1, 120-2) and the two flanges (134-1, 134-2) are connected with the mutually opposite ends of the sealing collar.

6. Sealing device (100) according to any one of the preceding claims, **characterised by** a securing means (140) for securing the reinforcing element (130) from displacement relative to the main body (110).

7. Sealing device (100) according to claim 6, **characterised in that** the securing means is constructed in the form of at least one pin securing means which extends in radial direction.

8. Sealing device (100) according to any one of the preceding claims, **characterised in that** the reinforcing element (130) is an integrated component of the sealing device (100).

9. Sealing device (100) according to claim 8, **characterised in that** the reinforcing element (130) is vulcanised in the main body (110) and the at least one sealing collar.

10. Sealing device (100) according to any one of the preceding claims, **characterised in that** the end (112), which is at the side of the pin bush, of the main body of the sealing device is formed in the relaxed, non-installed state to be wedge-shaped as seen in cross-section, wherein the main body increasingly widens at the end inwardly in radial direction as seen in direction towards the longitudinal axis (x) of the sealing device.

11. Roll arrangement with:
a roll (200) with a roll body (220) and at least one frusto-conical roll pin (210) formed at the roll body;
a pin bush (310) pushed onto the roll pin;
a chock (300) with a sealing ring (320) arranged at the end of the chock at the body side;
a bearing bush (330) arranged in the chock to be secure against relative rotation, wherein the roll pin (210) is rotatably mounted by the pin bush (310) in the bearing bush; and
the sealing device (100) according to any one of the preceding claims, which is arranged in radial direction between the frusto-conical roll pin (210) and the sealing ring (320) - against which the at least one sealing lip (122-1, 122-2) bears - and which is clamped in place in radial direction between frusto-conical roll pin (21) and the pin bush (310).

12. Roll arrangement according to claim 11, **characterised in that** the end (112), which is at the pin bush side, of the main body of the sealing device (100) in the state of being installed and clamped in place bears areally against the opposite radial smooth end (312) of the pin bush (310).

## Revendications

1. Dispositif d'étanchéisation (100) pour son montage entre les tourillons (210) d'un cylindre de laminage (200) et une empoise de cylindre (300), le cylindre de laminage étant monté en rotation dans une cage de laminoir, dans lequel le dispositif d'étanchéisation (100) présente :
un corps principal de forme annulaire (110) pour son enfilage sur les tourillons de cylindres (210) ;
au moins une couronne d'étanchéisation (120-1) surmoulée contre le corps principal et s'étendant à partir du corps principal en direction radiale vers l'extérieur, comprenant une lèvre d'étanchéité surmoulée (122-1) ; et
un élément d'armature (130) de forme annulaire comprenant une section (132) en forme de bande qui enserre en position coaxiale le côté externe du corps principal (110) ;
**caractérisé en ce que**
l'élément d'armature (130) présente, à côté de la section coaxiale (132) en forme de bande, au moins une bride (134-1) reliée à la section en forme de bande et s'étendant à partir de la section en forme de bande en direction radiale vers l'extérieur, ladite bride étant reliée à la couronne d'étanchéisation (120-1).

2. Dispositif d'étanchéisation (100) selon la revendication 1,
**caractérisé en ce que**
l'élément d'armature (130) est réalisé en une seule pièce et à partir d'une matière synthétique renforcée avec des fibres.

3. Dispositif d'étanchéisation (100) selon la revendication 2,
**caractérisé en ce que**
la section (132) en forme de bande de l'élément d'armature présente une armature (136) sous la forme d'une bande métallique, de préférence d'une bande en acier, qui est entourée au moins en partie avec la matière synthétique renforcée avec des fibres.

4. Dispositif d'étanchéisation (100) selon l'une quelconque des revendications 2 ou 3,
**caractérisé en ce que**
la fibre pour la matière synthétique renforcée avec des fibres est réalisée sous la forme d'une fibre textile, d'une fibre d'aramide, d'une fibre de carbone ou d'une fibre de verre, de préférence sous la forme d'un tissu.

5. Dispositif d'étanchéisation (100) selon l'une quelconque des revendications précédentes,
**caractérisé**
**en ce qu'**on prévoit deux couronnes d'étanchéisation (120-1, 120-2) surmoulées contre le corps principal (110) et s'étendant à partir du corps principal en direction radiale vers l'extérieur, qui sont disposées parallèlement l'une à l'autre et à l'écart l'une de l'autre en direction axiale (x) ; et
**en ce que** l'élément d'armature (130) présente, à côté de la section coaxiale (132) en forme de bande, deux brides (134-1, 134-2) reliées à la section en forme de bande et s'étendant à partir de la section en forme de bande en direction radiale vers l'extérieur, qui sont disposées parallèlement l'une à l'autre et à l'écart l'une de l'autre en direction axiale (x) ;
dans lequel l'élément d'armature (130) est disposé entre les deux couronnes d'étanchéisation (120-1, 120-2) et les deux brides (134-1, 134-2) sont reliés aux côtés frontaux des couronnes d'étanchéisation, disposés face à face.

6. Dispositif d'étanchéisation (100) selon l'une quelconque des revendications précédentes,
**caractérisé par**
un moyen de sécurisation (140) pour prémunir l'élément d'armature (130) contre un déplacement par rapport au corps principal (110).

7. Dispositif d'étanchéisation (100) selon la revendication 6, **caractérisé en ce que**
le moyen de sécurisation est réalisé sous la forme d'une sécurisation en forme de cheville qui s'étend en direction radiale.

8. Dispositif d'étanchéisation (100) selon l'une quelconque des revendications précédentes,
**caractérisé en ce que**
l'élément d'armature (130) est un constituant intégré du dispositif d'étanchéisation (100).

9. Dispositif d'étanchéisation (100) selon la revendication 8,
**caractérisé en ce que**
l'élément d'armature (130) est intégré par vulcanisation dans le corps principal (110) et dans ladite au moins une couronne d'étanchéisation.

10. Dispositif d'étanchéisation (100) selon l'une quelconque des revendications précédentes,
**caractérisé en ce que**
le côté frontal (112) du corps principal du dispositif d'étanchéisation, du côté des douilles de tourillons - vu en coupe transversale - à l'état détendu, non monté, est réalisé en une configuration cunéiforme, le corps principal s'élargissant du côté frontal de manière progressive en direction radiale vers l'intérieur - lorsqu'on regarde dans la direction de l'axe longitudinal (x) du dispositif d'étanchéisation.

11. Agencement de laminage comprenant :
un cylindre de laminage (200) comprenant une table de cylindre (220) et au moins un tourillon d'un cylindre de laminage (210) de forme tronconique surmoulé contre la table de cylindre ;
une douille de tourillon (310) enfilée sur le tourillon de cylindre de laminage ;
une empoise de cylindre (300) comprenant un anneau d'étanchéisation (320) disposé contre le côté frontal de l'empoise de cylindre, du côté de la table de cylindre ;
un coussinet de palier (330) disposé en antirotation dans l'empoise de cylindre, le tourillon de cylindre de laminage (210) étant monté en rotation avec la douille de tourillon (310) dans le coussinet de palier ; et
le dispositif d'étanchéisation (100) selon l'une quelconque des revendications précédentes, qui est disposé - en direction radiale - entre le tourillon de cylindre de laminage (210) de forme tronconique et l'anneau d'étanchéisation (320) contre lequel vient s'appliquer ladite au moins une lèvre d'étanchéité (122-1, 122-2), et qui est enserré - en direction axiale - entre le tourillon de cylindre de laminage (210) de forme tronconique et la douille de tourillon (310).

12. Agencement de laminage selon la revendication 11,
**caractérisé en ce que**
le côté frontal (112) du corps principal du dispositif d'étanchéisation (100), du côté des douilles de tourillons - à l'état monté et enserré - vient se disposer sur toute la surface contre le côté frontal lisse radial opposé (312) de la douille de tourillon (310).
